# EUROPEAN PATENT APPLICATION

(11) **EP 4 342 815 A1**
(43) Date of publication of application: **27.03.2024**
(21) Application number: 22804437.6
(22) Date of filing: 30.03.2022
(51) Int. Cl.: B65D 47/34, B65D 83/00

(54) **DISPENSING PUMP FOR REFILLABLE CONTAINER**

(30) Priority: 17.05.2021 JP 2021082945
(71) Applicant: Nippon Paper Industries Co., Ltd., Tokyo 114-0002 (JP)
(72) Inventor: OKUDE, Hideki, Tokyo 114-0002 (JP); NODA, Takaharu, Tokyo 114-0002 (JP)
(74) Representative: Murgitroyd & Company
(86) International application number: PCT/JP2022/016317
(87) International publication number: WO 2022/244521

(57) **Abstract**

To achieve a discharge pump for a refillable container, which enables air from an outside to flow into an inner container in a state of being hermetically sealed at the time of discharging a liquid matter, provided is a discharge pump (1) for a refillable container, which is to be attached to a lid member (5) for closing an opening (4) of an outer container (3), to suck and discharge a liquid matter inside an inner container (5). The discharge pump (1) includes: a tubular cylinder portion (11); a discharge nozzle (13) provided to an upper part of the tubular cylinder portion (11); and a suction tube (15) that is connected to a connection tube portion (14) provided to a lower part of the tubular cylinder portion (11). The suction tube (15) includes: a small-diameter tube portion (16) that is airtightly fitted onto an outer periphery of the connection tube portion (14); and a large-diameter tube portion (17) that is continuous to an upper end of the small-diameter tube portion (16), and is loosely fitted with an outer periphery of the tubular cylinder portion (11). The large-diameter tube portion (17) has a first ventilation hole (19) for allowing communication between an inside of the inner container (6) and a gap (18) between the tubular cylinder portion (11) and the large-diameter tube portion (17).

## Description

### Technical Field

The present invention relates to a discharge pump for a refillable container, which is to be attached to a lid member of an outer container to suck and discharge a liquid matter inside an inner container accommodated in the outer container.

### Background Art

There has been known a refillable container including: an inner container that stores therein a liquid matter, includes an upper surface provided with a suction port sealed with a sealing sheet, and is to be replaced at the time of exhaustion of the liquid matter; an outer container that accommodates the inner container; a lid member that closes the inner container accommodating the inner container; and a discharge pump that is attached to the lid member, and sucks and discharges the liquid matter stored in the outer container, the discharge pump including: a tubular cylinder portion that is fixed to a pump attachment port body provided on a top plate of the lid portion; a discharge nozzle that is provided to an upper part of the tubular cylinder portion, and serves also as an operation portion for a piston inside the tubular cylinder portion; and a suction tube that is connected to a connection pipe tube portion provided to a lower part of the tubular cylinder portion, and is inserted into a suction port provided in an upper surface of the inner container when an opening of the outer container is closed by the lid member (for example, see Patent Literature 1).

For attachment of the discharge pump as described in Patent Literature 1 to the lid member, an attachment cap is provided to the discharge pump so as to cover the tubular cylinder portion, and the discharge pump is attached to the lid member by fitting the tubular cylinder portion onto the pump attachment port body provided on the top plate of the lid member, and then screwing the attachment cap onto the pump attachment port body so as to fix the tubular cylinder portion to the pump attachment port body.

### Citation List

### Patent Literature

[PTL 1] JP 2019-119499 A

### Summary of Invention

### Technical Problem

According to the refillable container including the discharge pump as described in Patent Literature 1, when the opening of the outer container is closed by the lid member to break the sealing sheet sealing the suction port provided in the upper surface of the inner container so that the suction tube of the discharge pump is inserted into the inner container, the broken sealing sheet is brought into a state of being in close contact with an outer peripheral surface of the suction tube.

Accordingly, when work for sucking out the liquid matter from the inner container is performed by operating the discharge pump, due to the sucking out of the liquid matter, a pressure in the inner container becomes negative, resulting in a delay in return of the piston inside the tubular cylinder portion, and further, in a case of the inner container made of a flexible material, the inner container is sometimes dented due to the negative pressure, and hence, there is a problem that the liquid matter is prevented from being smoothly discharged from the inner container in some cases.

The present invention has an object to provide a discharge pump for a refillable container, which enables air from an outside to flow into an inner container under a state of being hermetically sealed at the time of discharging a liquid matter, so that the liquid matter can be smoothly discharged from the inner container.

### Solution to Problem

In order to achieve the above-mentioned object, according to the invention as described in claim 1, there is provided a discharge pump for a refillable container, the refillable container including: an outer container; an inner container accommodated in the outer container; and a lid member configured to close an opening of the outer container, the discharge pump being configured to be attached to the lid member and being configured to suck and discharge a liquid matter inside the inner container, the discharge pump including: a tubular cylinder portion which is to be fixed to a pump attachment port body provided on a top plate of the lid member; a discharge nozzle which is provided to an upper part of the tubular cylinder portion, and serves also as an operation portion for a piston inside the tubular cylinder portion; and a suction tube which is connected to a connection tube portion provided to a lower part of the tubular cylinder portion, and is to be inserted into a suction port provided in an upper surface of the inner container when the opening of the outer container is closed by the lid member. The suction tube includes: a small-diameter tube portion which is airtightly fitted onto an outer periphery of the connection tube portion provided to the lower part of the tubular cylinder portion, and is configured to suck in the liquid matter inside the inner container; and a large-diameter tube portion which is continuous to an upper end of the small-diameter tube portion, and is loosely fitted with an outer periphery of the tubular cylinder portion. The large-diameter tube portion has a first ventilation hole for allowing communication between an inside of the inner container and a gap between the tubular cylinder portion and the large-diameter tube portion.

According to the invention as described in claim 2, in the invention as described in claim 1, the tubular cylinder portion includes a cylinder tube, and the cylinder tube has a second ventilation hole for allowing communication between an inside of the cylinder tube and the gap between the tubular cylinder portion and the large-diameter tube portion, the second ventilation hole being formed in a tubular wall of the cylinder tube on a side communicating with an outside air and outside a moving range of the piston.

### Advantageous Effects of Invention

According to the discharge pump for a refillable container as described in claim 1, the suction tube includes: the small-diameter tube portion which is airtightly fitted onto the outer periphery of the connection tube portion provided to the lower part of the tubular cylinder portion, and is configured to suck in the liquid matter inside the inner container; and the large-diameter tube portion which is continuous to the upper end of the small-diameter tube portion, and is loosely fitted with the outer periphery of the tubular cylinder portion. The large-diameter tube portion has the first ventilation hole for allowing communication between the inside of the inner container and the gap between the tubular cylinder portion and the large-diameter tube portion. Accordingly, when work for sucking out the liquid matter from the inner container is performed by operating the discharge pump, and due to the sucking out of the liquid matter, a pressure in the inner container becomes negative, air of an amount corresponding to the sucking out of the liquid matter enters the gap between the tubular cylinder portion and the large-diameter tube portion from an upper end opening side of the large-diameter tube portion, and then, is sucked into the inner container from the first ventilation hole provided in the large-diameter tube portion through the gap. Thus, the liquid matter can be smoothly discharged from the inner container.

According to the discharge pump for a refillable container as described in claim 2, in the cylinder tube of the tubular cylinder portion as described in claim 1, the second ventilation hole for allowing communication between the inside of the cylinder tube and the gap between the tubular cylinder portion and the large-diameter tube portion is formed in the tubular wall on the side communicating with the outside air and outside the moving range of the piston. Accordingly, when the work for sucking out the liquid matter from the inner container is performed by operating the discharge pump, and due to the sucking out of the liquid matter, the pressure in the inner container becomes negative, the air of the amount corresponding to the sucking out of the liquid matter enters the gap between the tubular cylinder portion and the large-diameter tube portion from the upper end opening side of the large-diameter tube portion, and also enters the gap between the tubular cylinder portion and the large-diameter tube portion from the second ventilation hole included in the tubular wall on the side communicating with the outside air and outside the moving range of the piston. Thus, the air is easily sucked through the gap into the inner container brought into the negative pressure, and hence, the liquid matter can be further smoothly discharged from the inner container.

Further, even under a state in which the upper end opening of the large-diameter tube portion is closed, the air enters the gap between the tubular cylinder portion and the large-diameter tube portion from the second ventilation hole included in the tubular wall on the side communicating with the outside air and outside the moving range of the piston, and thus, the liquid matter can be smoothly discharged from the inner container.

### Brief Description of Drawings

FIG. 1 is an exploded sectional view for illustrating a discharge pump for a refillable container according to a first embodiment of the present invention.
FIG. 2 is a sectional view for illustrating one example of a refillable container to which the discharge pump of FIG. 1 has been attached.
FIG. 3 is an exploded sectional view of the refillable container of FIG. 2.
FIG. 4 is an explanatory view for illustrating a flow of air sucked into an inner container when a liquid matter is sucked out from the inner container, in the refillable container to which the discharge pump of FIG. 1 has been attached.
FIG. 5 is a sectional view for illustrating a discharge pump for a refillable container according to a second embodiment of the present invention.

### Description of Embodiments

Now, a discharge pump for a refillable container according to a first embodiment of the present invention is described in detail with reference to the drawings.

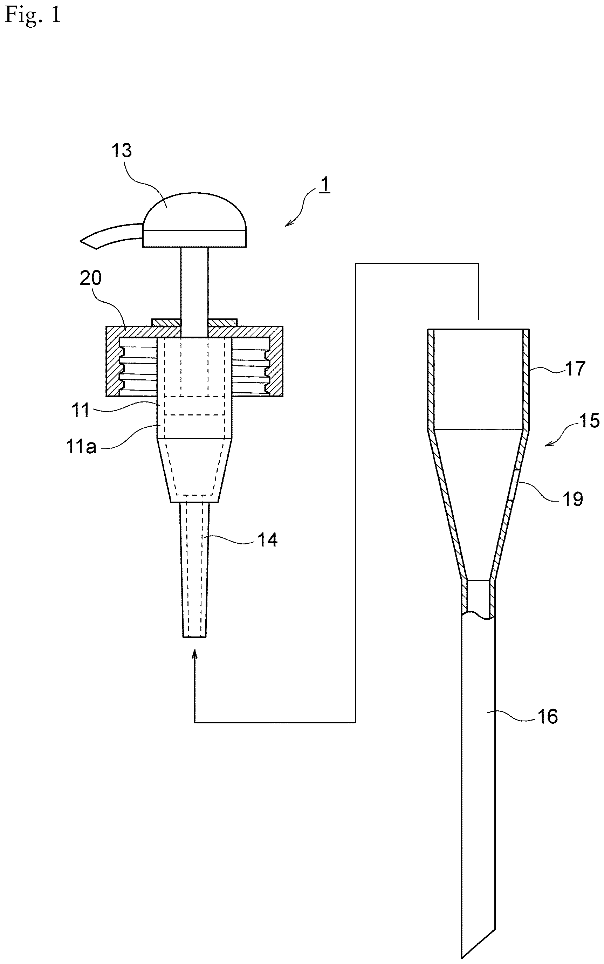

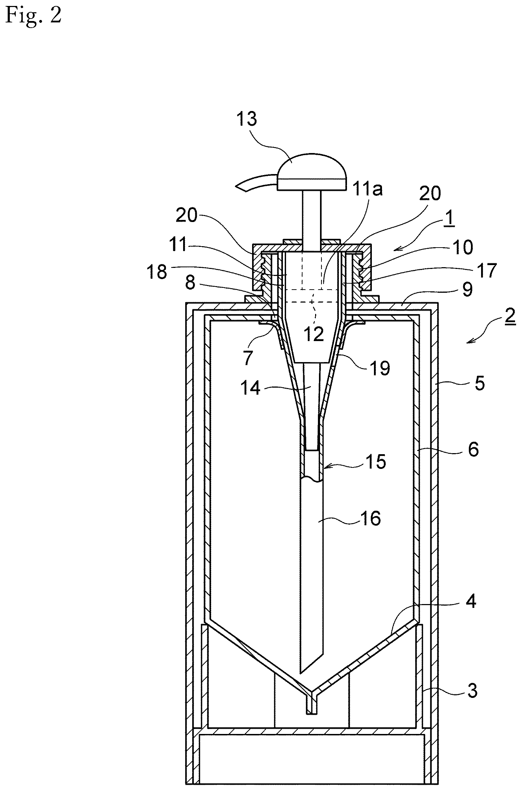

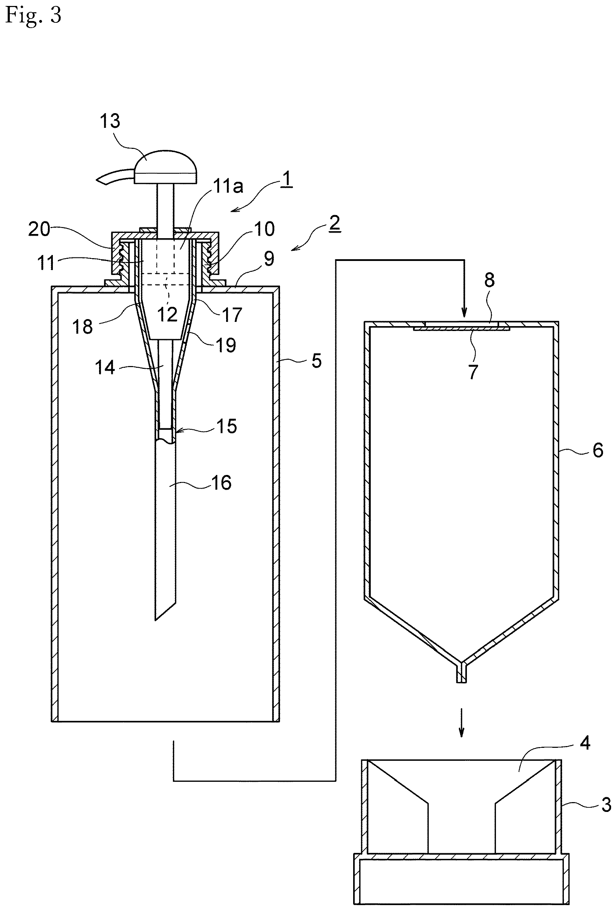

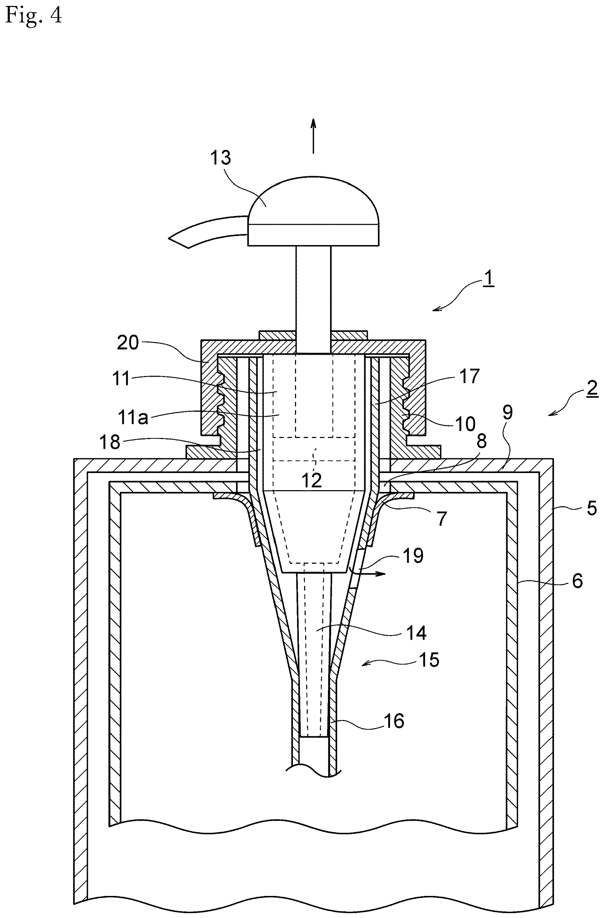

FIG. 1 is an exploded sectional view for illustrating the discharge pump for a refillable container according to the first embodiment. FIG. 2 is a sectional view for illustrating one example of a refillable container to which the discharge pump of FIG. 1 has been attached. FIG. 3 is an exploded sectional view of the refillable container of FIG. 2. FIG. 4 is an explanatory view for illustrating a flow of air sucked into an inner container when a liquid matter is sucked out from the inner container, in the refillable container to which the discharge pump of FIG. 1 has been attached.

A discharge pump 1 for a refillable container according to the first embodiment is to be attached to a lid member 5 for closing an opening 4 of an outer container 3 that forms a refillable container 2, so as to suck and discharge a liquid matter inside an inner container 6 accommodated in the outer container 3.

First, one example of the refillable container 2 in which the discharge pump 1 of the first embodiment is used is described.

The refillable container 2 includes: the inner container 6 that stores therein a liquid matter, has an upper surface provided with a suction port 8 sealed with a sealing sheet 7, and is to be replaced at the time of exhaustion of the liquid matter; the outer container 3 that includes the opening 4 in an upper part thereof, and accommodates the inner container 6; and the lid member 5 that has a tubular shape, is fitted onto the outer container 3 accommodating the inner container 6, and closes the opening 4 of the outer container 3.

Further, the lid member 5 includes a top plate 9, and a pump attachment port body 10 for attaching the discharge pump 1 is provided on the top plate 9.

The discharge pump 1 to be attached to the pump attachment port body 10 provided on the top plate 9 of the lid member 5 includes: a tubular cylinder portion 11 that is fitted and fixed to the pump attachment port body 10; a discharge nozzle 13 that is provided to an upper part of the tubular cylinder portion 11, and serves also as an operation portion for a piston 12 inside the tubular cylinder portion 11; and a suction tube 15 that is connected to a connection tube portion 14 provided to a lower part of the tubular cylinder portion 11, and, when the opening 4 of the outer container 3 is closed by the lid member 5, breaks the sealing sheet 7 sealing the suction port 8 provided in the upper surface of the inner container 6, so as to be inserted into the inner container 6.

The suction tube 15 includes: a small-diameter tube portion 16 that is airtightly fitted onto an outer periphery of the connection tube portion 14 provided to the lower part of the tubular cylinder portion 11, and sucks in the liquid matter inside the inner container 6; and a large-diameter tube portion 17 that is continuous to an upper end of the small-diameter tube portion 16, and is loosely fitted with an outer periphery of the tubular cylinder portion 11. The large-diameter tube portion 17 has a first ventilation hole 19 for allowing communication between an inside of the inner container 6 and a gap 18 between the tubular cylinder portion 11 and the large-diameter tube portion 17.

Further, an attachment cap 20 is provided to the discharge pump 1 so as to cover the tubular cylinder portion 11, and the discharge pump 1 is attached to the lid member 5 by fitting the tubular cylinder portion 11 of the discharge pump 1 to the pump attachment port body 10 provided on the top plate 9 of the lid member 5, and then screwing the attachment cap 20 onto the pump attachment port body 10 so as to fix the tubular cylinder portion 11 to the pump attachment port body 10.

According to the discharge pump 1 for a refillable container of the first embodiment having the above-mentioned configuration, the suction tube 15 includes: the small-diameter tube portion 16 that is airtightly fitted onto the outer periphery of the connection tube portion 14 provided to the lower part of the tubular cylinder portion 11, and sucks in the liquid matter inside the inner container 6; and the large-diameter tube portion 17 that is continuous to the upper end of the small-diameter tube portion 16, and is loosely fitted with the outer periphery of the tubular cylinder portion 11. The large-diameter tube portion 17 has the first ventilation hole 19 for allowing communication between the inside of the inner container 6 and the gap 18 between the tubular cylinder portion 11 and the large-diameter tube portion 17. Accordingly, when work for sucking out the liquid matter from the inner container 6 is performed by operating the discharge pump 1, and due to the sucking out of the liquid matter, a pressure in the inner container 6 becomes negative, air of an amount corresponding to the sucking out of the liquid matter enters the gap 18 between the tubular cylinder portion 11 and the large-diameter tube portion 17 from an upper end opening side of the large-diameter tube portion, and then, is sucked into the inner container 6 from the first ventilation hole 19 provided in the large-diameter tube portion 17 through the gap 18. Thus, the liquid matter can be smoothly discharged from the inner container 6.

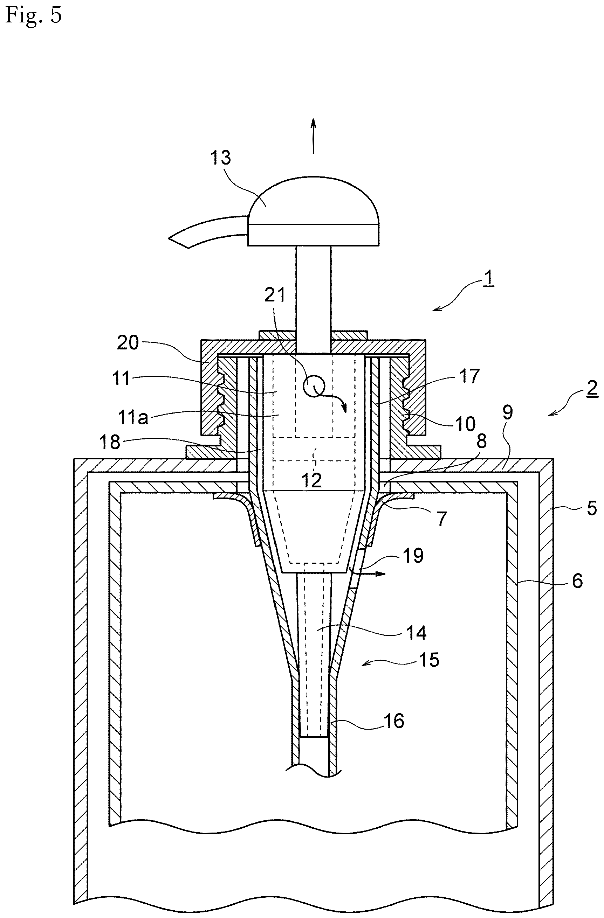

FIG. 5 is a sectional view for illustrating a discharge pump for a refillable container according to a second embodiment of the present invention.

With regard to the discharge pump for a refillable container of the second embodiment, configurations identical to those of the first embodiment are denoted by the same reference symbols, description thereof is omitted, and configurations different from those of the first embodiment are described.

In a discharge pump 1 for a refillable container of the second embodiment, the tubular cylinder portion 11 includes a cylinder tube 11a, and a second ventilation hole 21 for allowing communication between an inside of the cylinder tube 11a and the gap 18 between the tubular cylinder portion 11 and the large-diameter tube portion 17 is formed in a tubular wall of the cylinder tube 11a on a side communicating with an outside air and outside a moving range of the piston 12.

Other configurations are similar to those of the first embodiment.

According to the discharge pump 1 for a refillable container of the second embodiment having the above-mentioned configuration, in the cylinder tube 11a of the tubular cylinder portion 11, the second ventilation hole 21 for allowing communication between the inside of the cylinder tube 11a and the gap 18 between the tubular cylinder portion 11 and the large-diameter tube portion 17 is formed in the tubular wall on the side communicating with the outside air and outside the moving range of the piston 12. Accordingly, when work for sucking out the liquid matter from the inner container 6 is performed by operating the discharge pump 1, and due to the sucking out of the liquid matter, a pressure in the inner container 6 becomes negative, air of an amount corresponding to the sucking out of the liquid matter enters the gap 18 between the tubular cylinder portion 11 and the large-diameter tube portion 17 from the upper end opening side of the large-diameter tube portion 17, and also enters the gap 18 between the tubular cylinder portion 11 and the large-diameter tube portion 17 from the second ventilation hole 21 included in the tubular wall of the cylinder tube 11a on the side communicating with the outside air and outside the moving range of the piston 12. Thus, the air is easily sucked through the gap 18 into the inner container 6 brought into the negative pressure, and hence, the liquid matter can be further smoothly discharged from the inner container 6.

Further, even under a state in which the upper end opening of the large-diameter tube portion 17 is closed, the air enters the gap 18 between the tubular cylinder portion 11 and the large-diameter tube portion 17 from the second ventilation hole 21 included in the tubular wall of the cylinder tube 11a on the side communicating with the outside air and outside the moving range of the piston 12, and hence, the liquid matter can be smoothly discharged from the inner container 6.

Other effects are similar to those of the first embodiment, and thus, the description thereof in the first embodiment is applied.

### Reference Signs List

1 discharge pump
2 refillable container
3 outer container
4 opening
5 lid member
6 inner container
7 sealing sheet
8 suction port
9 top plate
10 pump attachment port body
11 tubular cylinder portion
11a cylinder tube
12 piston
13 discharge nozzle
14 connection tube portion
15 suction tube
16 small-diameter tube portion
17 large-diameter tube portion
18 gap
19 first ventilation hole
20 attachment cap
21 second ventilation hole

## Claims

1. A discharge pump for a refillable container,
the refillable container including:
an outer container;
an inner container accommodated in the outer container; and
a lid member configured to close an opening of the outer container,
the discharge pump being configured to be attached to the lid member and being configured to suck and discharge a liquid matter inside the inner container,
the discharge pump comprising:
a tubular cylinder portion which is to be fixed to a pump attachment port body provided on a top plate of the lid member;
a discharge nozzle which is provided to an upper part of the tubular cylinder portion, and serves also as an operation portion for a piston inside the tubular cylinder portion; and
a suction tube which is connected to a connection tube portion provided to a lower part of the tubular cylinder portion, and is to be inserted into a suction port provided in an upper surface of the inner container when the opening of the outer container is closed by the lid member,
wherein the suction tube includes:
a small-diameter tube portion which is airtightly fitted onto an outer periphery of the connection tube portion provided to the lower part of the tubular cylinder portion, and is configured to suck in the liquid matter inside the inner container; and
a large-diameter tube portion which is continuous to an upper end of the small-diameter tube portion, and is loosely fitted with an outer periphery of the tubular cylinder portion, and
wherein the large-diameter tube portion has a first ventilation hole for allowing communication between an inside of the inner container and a gap between the tubular cylinder portion and the large-diameter tube portion.

2. The discharge pump for a refillable container according to claim 1, wherein the tubular cylinder portion includes a cylinder tube, and the cylinder tube has a second ventilation hole for allowing communication between an inside of the cylinder tube and the gap between the tubular cylinder portion and the large-diameter tube portion, the second ventilation hole being formed in a tubular wall of the cylinder tube on a side communicating with an outside air and outside a moving range of the piston.
